# EUROPÄISCHE PATENTSCHRIFT

(11) **EP 1 355 993 B1**
(45) Veröffentlichungstag und Bekanntmachung des Hinweises auf die Patenterteilung: **12.11.2008**
(21) Anmeldenummer: 01991651.9
(22) Anmeldetag: 20.12.2001
(51) Int. Cl.: C09D 4/00, C09D 183/04, C09D 179/00, C03C 1/00, C09D 185/00, C08G 77/02, C08G 79/00, C08G 77/06

(54) **VERFAHREN ZUR HERSTELLUNG LÖSUNGSMITTELARMER SOL-GEL-SYSTEME**
PROCESS FOR THE PRODUCTION OF SOLVENT-POOR SOL-GEL-SYSTEMS
PROCEDE DE FABRICATION DES SYSTEMES SOL-GEL PAUVRES EN SOLVANTS

(30) Priorität: 20.12.2000 DE 10063519
(43) Veröffentlichungstag der Anmeldung: 29.10.2003
(73) Patentinhaber: Nano-X GmbH, 66130 Saarbrücken (DE)
(72) Erfinder: SEPEUR, Stefan, Nano-X GmbH, 66130 Saarbrücken (DE); KUNZE, Nora, Nano-X GmbH, 66130 Saarbrücken (DE); KIHM, Michael, Nano-X GmbH, 66130 Saarbrücken (DE)
(74) Vertreter: Wieske, Thilo
(86) Internationale Anmeldenummer: PCT/DE2001/004814
(87) Internationale Veröffentlichungsnummer: WO 2002/050191

(56) Entgegenhaltungen:
- EP-A- 0 399 148
- EP-A- 0 486 469
- EP-A- 0 927 733
- EP-A- 0 938 405
- WO-A-99/52964
- US-A- 6 008 285

## Beschreibung

Gegenstand der vorliegenden Erfindung ist ein Verfahren zur Herstellung lösungsmittelarme Sol-Gel-Systeme.

Ursprünglich wurde das Sol-Gel-Verfahren verwendet, um aus zunächst löslichen Verbindungen über die Zwischenstufe eines Gels schließlich keramische Massen oder Gläser zu erhalten. Ein besonderer Vorteil dieses Verfahrens besteht darin, daß im Gegensatz zu den klassischen keramischen Verfahren weit homogenere Produkte erhalten werden. Auch können hervorragende Überzüge erzeugt werden, wobei eine alkoholische Lösung hydrolisierbarer Alkoholate mit mehrwertiger Metallionen auf eine Oberfläche aufgetragen werden und bei Verdunsten des alkoholischen Lösungsmittels ein Metallhydroxidnetzwerk ausbilden. Diese Beschichtung, die zahlreiche MOH-Gruppen enthält ist hydrophil und antistatisch. Bei Erhöhung der Temperatur reagieren die MOH-Gruppen dann unter Wasserabspaltung zu Metalloxidgruppierungen, wodurch die Oberflächen hart und kratzfest werden. Oft finden solche Materialien als Bindermaterialien Verwendung. Zur Herstellung stabiler Phasen (Sole) werden üblicherweise Alkoxysilane mit Säuren oder Basen in wäßriger Lösung bis zu einem gewissen Grad katalytisch hydrolisiert, mit Kieselsolen oder sonstigen Partikeln gefüllt und mit Alkoholen als Lösungsmittel auf einen verfahrenstechnisch vorgegebenen Feststoffgehalt eingestellt. Anwendungsbeispiele für solche Systeme sind abriebfeste Beschichtungen, Korrosionsschutz, brechwertangepaßte Beschichtungen z.B. für Brillengläser und dergl..

Vor einiger Zeit wurde durch die Nutzung von Nanopartikeln bei der vorstehend beschriebenen Herstellung stabiler Phasen die Grundlage für eine bedeutende Weiterentwicklung entsprechender Beschichtungen gelegt. Hierdurch konnten weitere Funktionen in die als Produkt erhaltenen Systeme eingeführt werden, wie z.B. eine bessere Brechwerteinstellung oder IR-Absorption und noch höhere Abriebfestigkeiten und schmutzabweisende Eigenschaften.

Aus der DE 198 16 136 AI ist ein Verfahren zur Herstellung von Sol-Gel-Systemen bekannt, bei dem das Lösungsmittel, im allgemeinen ein Alkohol, bevorzugt unter vermindertem Druck aus dem Reaktionssystem entfernt wird. Auf diese Weise wurden Wäßrige bzw. alkoholische Sol-Gel-Systeme erhalten, die als einphasige, wasserverdünnbare Systeme vorlagen.

Die Lehre der DE 198 16 136 A1 beruht dabei auf der Erkenntnis, daß das Abziehen des Alkohols erforderlich ist, um die Reaktion insbesondere die Beschichtung von Nanoteilchen mit organisch modifizierten Alkoxysilanen so weit zu führen, daß ein hydrolyse- und kondensationsstabiles System entsteht, wobei diese Systeme z.B. für die eingangs erwähnten Beschichtungszwecke eingesetzt werden können. Die DE 198 16 136 A1 offenbart die Entfernung des Alkohols ausschließlich unter Vakuum und bei Temperaturen von bis zu 40 °C am Rotationsverdampfer. EP-A-0 927 733 betrifft ein Verfahren zur Herstellung von Polyorganosiloxanen durch Hydrolyse und Kondensation eines Gemisches aus Alkylsilikaten und Alkylsilanen und Si Cl-Gruppen aufweisenden Verbindungen unter Entfernung von Wasser durch Azeotropdestillation.

Aufgabe der vorliegenden Erfindung ist es daher, ein Verfahren zur Herstellung lösungsmittelarmer Sol-Gel-Systeme anzugeben, mit dem eine verfahrenstechnisch möglichst einfache Herstellung lösungsmittelarmer Sol-Gel-Systeme möglich ist, um den Stand der Technik zumindest um ein weiteres Verfahren zu bereichern.

Es ist weiterhin Aufgabe der vorliegenden Erfindung eine Verwendung dieser Sol-Gel-Systeme anzugeben.

Die vorliegende Aufgabe wird durch ein Verfahren zur Herstellung lösungsmittelarmer Sol-Gel-Systeme mit den in Anspruch 1 angegebenen Verfahrensschritten gelöst.

Vorteilhafte Ausgestaltungen der vorliegenden Erfindung sind Gegenstand der Ansprüche 2 bis 13.

Überraschenderweise wurde gefunden, daß durch das erfindungsgemäße Fällungs-/Emulsionsverfahren eine stabile Solphase erhalten wird, dadurch daß durch Zugabe einer entsprechenden Menge Wasser (im Überschuß) zu der Reaktionsmischung eine Phasentrennung in eine wasserunlösliche Kondensatphase und eine wäßrige Phase einsetzt, wobei erstere das gewünschte Produkt und letztere ungewünschte Alkohol- und Veresterungsprodukte sowie wasserlösliche niedermolekulare Kondensate enthält. Der Lösungsmittelgehalt der wäßrigen Phase ist von der Art der Ausgangsverbindungen und von der Löslichkeit des entstandenen Alkohols in der wäßrigen Phase und von der Trennungseffizienz ("Menge des Extraktionsmittels Wasser und der eingesetzten Extraktionsschritte") abhängig. Durch o.g. Verfahren wird aus der wasserunlöslichen Phase mit dem gewünschten Produkt annähernd alles Lösungsmittel entfernt. Der Restgehalt an dem alkoholischen Lösungsmittel bzw. Alkohol in der Kondensatphase beträgt allgemein weniger als 5 Gew.-%, bevorzugt weniger als 1 Gew.-% und besonders bevorzugt weniger als 0,5 Gew.-%, wobei der Lösungsmittelgehalt von der Art der Ausgangsverbindungen abhängt und besonders von dem Grad der Wasserlöslichkeit des Kondensats. Die wasserunlösliche, lösungsmittelarme Phase kann nun unter Anwendung entsprechender Verfahren, die allgemein bekannt sind, wieder in Wasser aufgenommen bzw. dispergiert werden.

Im Gegensatz zu dem Verfahren gemäß DE 198 16 136 A1 kann es vorliegend z.B. nicht zu einer Unterkühlung der Kondensatphase bzw. Solphase und einem Auskristallisieren kondensierter Silanpartikel kommen. Mit anderen Worten verringert sich der für die Überwachung des Verfahrens zur Herstellung lösungsmittelarmer Sol-Gel-Systeme erforderliche Aufwand durch das erfindungsgemäße Verfahren beträchtlich, weil vorliegend kein Abtrennen eines Alkohols bzw. eines Lösungsmittels im Vakuum erfolgt und somit die Einhaltung von empfindlichen Prozeßparametern, wie z.B. Druck und Temperatur, nicht in einem derart engen Regime überwacht werden muß.

Grundsätzlich sind alle beliebigen Silane und/oder ein oder mehrere Alkoxyde allgemein von Metallen zum Einsatz, d.h. zur Hydrolyse oder Kondensation in dem erfindungsgemäßen Verfahren geeignet.

Als Metallalkoxyde werden erfindungsgemäß bevorzugt Alkoxyde der Elemente Al, Ga, Ge, Sn, Ti, Zr, Hf, V, Nb und Ta verwendet.

Als Silane werden bevorzugt solche eingesetzt, die über organisch vernetzbare Substituenten verfügen und/oder über teilweise oder vollständig fluorierte Substituenten. Solche vernetzbaren Gruppierungen, d.h. die Gruppierungen die allgemein zur Additions- oder Kondensationsreaktionen befähigt sind, sind dem Fachmann auf dem vorliegenden Gebiet allgemein bekannt und z.B. der DE 198 16 136 A1 zu entnehmen.

Ebenfalls bevorzugt für die vorliegende Erfindung verwendete Silane sind Glycidyloxypropyltriethoxysilan (GPTES), 3-Methacryloxypropyltrimethoxysilan (MPTS), Methyltriethoxysilan (MTEOS), Tetraethoxysilan (TEOS), Vinyltriethoxysilan (VTES), Vinyltrimethoxysilan (VTMS) und natürlich Silane wie Tetramethoxysilan, Tetraethoxysilan, Tetra-n-propoxysilan, Tetra-n-butoxysilan, Cyclohexyltrimethoxysilan, Cyclopentyltrimethoxysilan, Ethyltrimethoxysilan, Phenylethyltrimethoxysilan, Phenyltrimethoxysilan, n-Propyltrimethoxysilan, Cyclohexylmethyldimethoxysilan, Dimethyldimethoxysilan, Diisopropyldimethoxysilan, Phenyimethyldimethoxysilan, Phenylethyltriethoxysilan, Phenyltriethoxysilan, Phenylmethyldiethoxysilan und Phenyldimethylethoxysilan. Die letztgenannten Alkoxysilane werden dabei bevorzugt in Kombination mit zur Addition oder Kondensation fähigen Silanen oder Verbindungen eingesetzt.

Obwohl sich gezeigt hat, daß die Kondensatphase aus Anspruch 1, Schritt c) bereits über eine ausreichende Lagerstabilität verfügt und durchaus zur Herstellung z.B. von Beschichtungen geeignet ist, ist es gemäß einer Weiterbildung des erfindungsgemäßen Verfahrens bevorzugt die Kondensatphase aus Schritt c) wieder mit \Nasser aufzunehmen. Hierdurch ist es möglich, das Sol-Gel-System gemäß den Anforderungen der vorgesehenen Verwendung und der Art des eingesetzten Applikationsverfahrens anzupassen. Ein weiterer Vorteil wird dabei erhalten, wenn der Kondensatphase zunächst ein Emulgator zugesetzt wird, dieser mit der Kondensatphase vermischt und diese Mischphase anschließend mit Wasser aufgenommen wird, weil sich hierdurch die Lagerstabilität der Kondensatphase bzw. des erhaltenen Systems vorteilhafterweise weiter steigern läßt.

Bei der Aufnahme der Kondensatphase mit Wasser, egal ob mit oder ohne Emulgator, sowie bei der Beimischung des Emulgators zur Kondensatphase können auf dem Gebiet des Vermischens von flüssigen Substanzen allgemein bekannte Vorrichtungen zum Dispergieren oder Homogenisieren eingesetzt werden.

Als Emulgator können z.B. die kommerziell erhältlichen Tenside der Bezeichnung Disponil® der Fa. Cognis verwendet werden.

In einer besonderen Weiterbildung des erfindungsgemäßen Verfahrens werden die wasserlöslichen der in Schritt a) des erfindungsgemäßen Verfahrens eingesetzten Verbindungen durch Umsetzung mit wasserunlöslichen, bevorzugt organischen Verbindungen vor oder nach der Hydrolyse oder Kondensation in eine wasserunlösliche Form überführt, weil dies sich günstig auf den Erhalt der Kondensatphase ausbildet. Durch Einführen der wasserunlöslichen Verbindung wird nämlich die Phasentrennung auf Zusatz von Wasser erleichtert und die Kristallisationsneigung überraschenderweise zusätzlich zurückgedrängt.

In einer weiteren, besonderen Ausgestaltung des erfindungsgemäßen Verfahrens werden der Kondensatphase Nanopartikel zugesetzt. Hierdurch ist die Beschichtung dieser Nanopartikel mit dem Kondensat und somit eine entsprechende Beeinflussung der Eigenschaften der Nanopartikel möglich. Es ist bevorzugt, wenn bezogen auf die Kondensatphase, dieselbe mit 0,5 bis 100 Gew.-% an Nanopartikeln versetzt wird, wobei es besonders bevorzugt ist, wenn die Nanopartikel eine Größe von 2 bis 300 nm besitzen.

In einer weiteren Ausgestaltung des erfindungsgemäßen Verfahrens können dem Sol-Gel-System, d.h. der Kondensatphase, ferner Mattierungsmittel und/oder eine mehrere Verbindungen aus der Gruppe der Farbstoffe, Antifoulingmittel, Antistatikmittel, Antibeschlagmittel, Korrosionsinhibitoren, Gleitadditive sowie Mittel zur Einstellung der Viskosität zugesetzt werden. Diese Mittel, die einzeln oder zu mehreren gemeinsam eingesetzt werden können, verbleiben in der aus dem Sol-Gel-System, bzw. der Kondensatphase herzustellenden Schicht oder in dem daraus hergestellten Formkörper und verleihen diesen Produkten entsprechende vorteilhafte Eigenschaften, wodurch sie die ohnehin vorteilhaften Eigenschaften der besonderen Kratz- und Abriebfestigkeit und auch der zumindest teilweise vorhandenen Transparenz weiter ergänzen.

Das Sol-Gel-System wird allgemein durch ein naßchemisches Verfahren auf ein Substrat appliziert oder aufgebracht, insbesondere durch Sprühen, Gießen, Fluten, Tauchen, Schleudern, Walzen oder Drucken, wobei es sich bei den genannten Verfahren sämtlich um ausgereifte Verfahren handelt, die gut beherrschbar und effizient durchzuführen sind.

Fluten, Tauchen, Schleudern, Walzen oder Drucken, wobei es sich bei den genannten Verfahren sämtlich um ausgereifte Verfahren handelt, die gut beherrschbar und effizient durchzuführen sind.

Die Trocknung, bzw. die Aushärtung des erfindungsgemäßen hergestellten Sol-Gel-Systems erfolgt allgemein in einem Temperaturbereich von etwa 20 bis 500 °C für einen Zeitraum, der so kurz wie eine Sekunde sein, aber auch mehrere Stunden andauern kann.

Es ist bevorzugt, wenn das Trocknen in einem Umluftofen erfolgt oder mittels geeigneter elektromagnetischer Strahlung, wie z.B. UV-, IR-, Elektronen- oder Mikrowellenstrahlung. Hinsichtlich des mit dem Sol-Gel-System der vorliegenden Erfindung zu beschichtenden Substrats bestehen keine besonderen Beschränkungen. Es ist jedoch allgemein bevorzugt, wenn das Substrat aus Keramik, Holz, Metall, Stein, Kunststoff (lackierte Oberflächen), Glas und/oder Beton besteht, wobei es insbesondere bevorzugt ist, wenn die Schritte der Applikation des Sol-Gel-Systems auf ein Substrat und das anschließende Trocknen wenigstens einmal wiederholt werden. Hierdurch läßt sich vorteilhafterweise eine dichtere Oberflächenbeschichtung erzielen. Von besonderem Vorteil ist weiterhin, daß bei der wiederholten Applikation Sol-Gel-Systeme eingesetzt werden können, die von unterschiedlicher Zusammensetzung sind, so daß die daraus resultierenden Oberflächeneigenschaften durch den Fachmann entsprechend der Anforderungen sehr genau angepaßt werden können.

Das erfindungsgemäß hergestellte Sol-Gel-System findet insbesondere Anwendung bei Möbelfolien und PC-Karten, wobei es auf die besondere Kratzbeständigkeit der Beschichtungen ankommt, als Binder für Glaswolle oder Steinwolle, wobei die Wirkung als Bindemittel und als flammhemmende Mittel im Vordergrund stehen, bei Anwendungen zum Korrosionsschutz, zur Herstellung von leicht zu reinigenden oder von selbstreinigenden Oberflächen, insbesondere auch von strukturierten Oberflächen, als Additiv für kommerzielle Lacksysteme, zur Erhöhung der Abriebfestigkeit und zur verbesserten Schmutzabweisung durch eine Einstellung der Oberflächenenergie, auf Steinen zur Reduzierung von Ausblühungen und als Fleckenschutz vor Kaffee, Rotwein, Graffiti und dergl., sowie als Bindematerial für Papier, Steingranulate, Holz, Naturstoffe, wie z.B. Stroh, Textilien usw.

Die Erfindung wird nachfolgend anhand von Ausführungsbeispielen näher erläutert, die allein zum Verständnis der Erfindung dienen und nicht zu deren Beschränkung.

### Beispiel 1

### a) Herstellung einer lösungsmittelarmen Kondensatphase

Zu 139,0 g Glycidoxypropyltriethoxysilan (GPTES), bezogen von Degussa-Hüls, werden 0,02 g 1-Methylimidazol (M1) gegeben und gerührt. Anschließend werden 45,6 g Bisphenol A (BPA) zugegeben und unter Rühren 30 Min. im Wasserbad auf 80 °C erhitzt. Bei der stattfindenden Additionsreaktion verfärbt sich das Reaktionsgemisch von transparent gelb zu dunkelbraun. Nach der Reaktion werden zur Hydrolyse 28,4 g 5 %-ige Essigsäure zugegeben und bei Raumtemperatur 16 Stunden hydrolisiert. Danach werden 200 g deionisiertes Wasser zugesetzt und 10 Min. verrührt, wobei sich 2 Phasen bilden. Die lösungsmittel- und wasserhaltige obere Phase wird im Scheidetrichter abgetrennt.

### b) Herstellung einer Emulsion (Feststoffgehalt etwa 15 %)

100 g der dunkelbraunen, leicht viskosen Phase (Kondensationsrückstand) wird mit 25,0 g des Tensids Disponil® FES 993 IS (Fa. Cognis) versetzt, im Wasserbad auf 80 °C erhitzt und gerührt. Nach 20 Min. werden 375 g 80 °C warmes Wasser zugegeben und mit einem Ultraturax® (Fa. IKA) 3 bis 5 Min. homogenisiert.

Die erhaltene Dispersion kann durch bekannte naßchemische Applikationsverfahren auf ein beliebiges Substrat aufgebracht werden und eignet sich insbesondere zum Korrosionsschutz von Leichtmetallen und Stahl, als abriebfeste Beschichtung für Polymere oder im undispergierten Zustand als Druckfarbe oder Lackadditiv.

### Beispiel 2

### a) Herstellung der lösungsmittelarmen Kondensatphase

Zunächst wurde wie in Beispiel 1 verfahren. Nach der Additionsreaktion, die sich durch Verfärbung des Reaktionsgemisches von transparent gelb zu dunkelbraun zeigt, werden 5 g Dynasilan® F 8261 (Degussa-Hüls) zugesetzt. Nach der Reaktion werden zur Hydrolyse 28,4 g 5 %-ige Essigsäure zugegeben und bei Raumtemperatur 16 Std. hydrolisiert. Danach werden 200 g deionisiertes Wasser zugesetzt und 10 Min. verrührt, wobei sich zwei Phasen bilden. Die lösungsmittel- und wasserhaltige obere Phase wird im Scheidetrichter abgetrennt.

### b) Herstellung einer Emulsion (Feststoffgehalt etwa 15 %)

Die Emulsion wurde auf identische Weise wie in Beispiel 1 erhalten.

Diese Dispersion kann durch bekannte naßchemische Applikationsverfahren auf ein beliebiges Substrat aufgebracht werden und eignet sich insbesondere zum Korrosionsschutz von Leichtmetallen und Stahl, als abriebfeste Beschichtung für Polymere oder im undispergierten Zustand als Druckfarbe oder Lackadditiv mit niedriger Oberflächenenergie.

### Beispiel 3

### a) Herstellung der lösungsmittelarmen Kondensatphase

Zu 24,8 g MEMO ® (Degussa-Hüls) werden 1,35 g 10 %-ige Ameisensäure gegeben und 3 Stunden gerührt. Anschließend werden 0,32 g Aluminium secbutoxid (Fa. Fluka) zugegeben und 2 Stunden bei Raumtemperatur gerührt.

Anschließend werden dem Reaktionsgemisch in einem Scheidetrichter 25 g Wasser zugegeben und gut geschüttelt, wobei sich zwei Phasen bilden. Die organische Phase wird nach Phasentrennung direkt abgetrennt. Zur photochemischen Aushärtung des Gemisches werden 0,8 g des Photoinitiators Irgacure 5000 (Fa. Ciba) zugesetzt. Das Gemisch wird anschließend durch Rakeln auf Substrat wie z.B. Polycarbonatplatten aber auch auf Steinplatten aufgebracht und mit einem Quecksilberhochdruckstrahler unter einem UVTrockner im Durchlauf mit einer Strahlungsleistung von 2 J/CM2 getrocknet. Man erhält eine kratzfeste Oberfläche, die eine gute Resistenz gegenüber Stahlwolle zeigt.

### b) Herstellung einer Emulsion (FeststofTgehalt etwa 15 %)

100 g der leicht viskosen Phase (Kondensationsrückstand) wird mit 20,0 g des Tensids Disponil® 286 (Fa. Cognis) versetzt, im Wasserbad auf 80 °C erhitzt und gerührt. Nach 20 Min. werden 400 g 80 °C warmes Wasser zugegeben und mit einem Ultraturax (IKA) 3 bis 5 Min. homogenisiert.

Diese Dispersion kann durch bekannte naßchemische Applikationsverfahren wie Sprühen, tauchen, Walzen und dergl. auf eine beliebiges Substrat aufgebracht werden und eignet sich insbesondere als abriebfeste Beschichtung für Polymere oder im undispergierten Zustand als Druckfarbe oder Lackadditiv.

### Beispiel 4

### a) Herstellung der lösungsmittelarmen Kondensatphase

Zu 24, 8 g MEMO ® (Degussa-Hüls) werden 1,35 g 10 %-ige Ameisensäure gegeben und 4 Std. bei Raumtemperatur gerührt. Anschließend werden dem Reaktionsgemisch in einem Scheidetrichter 25 g Wasser zugegeben und gut geschüttelt, wobei sich zwei Phasen bilden. Die organische Phase wird nach Phasentrennung direkt abgetrennt. Die photochemische Auswertung erfolgt wie in Beispiel 3 unter a beschrieben.

### b) Herstellung einer Emulsion (Feststoffgehalt etwa 15 %)

100 g der leicht viskosen Phase (Kondensationsrückstand) wird mit 20,0 g des Tensids Disponil® 286 (Fa. Cognis) versetzt, im Wasserbad auf 80 °C erhitzt und gerührt. Nach 20 Min. werden 400 g 80 °C warmes Wasser zugegeben und mit einem Ultraturax (Fa. IKA) 3 bis 5 Min. homogenisiert.

Wie üblich kann diese Dispersion durch allgemein bekannte naßchemische Applikationsverfahren wie Sprühen, Tauchen, Walzen und dergl, auf ein beliebiges Substrat aufgebracht werden. Sie eignet sich insbesondere als abriebfeste Beschichtung für Polymere oder im undispergierten Zustand als Druckfarbe oder Lackadditiv.

### Beispiel 5

### a) Herstellung der lösungsmittelarmen Kondcnsatphase

Zu 24,8 g MEMO ® (Fa. Degussa-Hüls) werden 1,35 g 10 %-ige Ameisensäure gegeben und 3 Std. gerührt. Anschließend werden 0,32 g Aluminium sec-butoxid (Fa. Fluka) und 0,73 g Dynasilan® F 8261 zugegeben und 2 Std. bei Raumtemperatur gerührt. Dann werden dem Reaktionsgemisch in einem Scheidetrichter 25 g Wasser zugegeben und gut geschüttelt, wobei sich zwei Phasen bilden. Die organische Phase wird nach Phasentrennung direkt abgetrennt. Zur photochemischen Auswertung des Gemisches werden 0,8 g des Photoinitiators Irgacure® 500 (Fa. Ciba) zugesetzt. Das Gemisch wird anschließend durch Rakeln auf Substrate wie z.B. auf Polycarbonaten aber auch auf Steinplatten aufgebracht und mit einem Quecksilberhochdruckstrahler unter einem UV-Trockner im Durchlauf mit einer Strahlungsleistung von 2 J/cm² getrocknet. Man erhält eine kratzfeste Oberfläche mit niedriger Oberflächenenergie (ca. 20 mJ/m²) die eine gute Resistenz gegenüber Stahlwolle zeigt.

### b) Herstellung einer Emulsion (Feststoffgehalt etwa 15 %)

100 g der leicht viskosen Phase (Kondensationsrückstand) wird mit 20,0 g des Tensids Disponil® 286 (Fa. Cognis) versetzt, im Wasserbad auf 80 °C erhitzt und gerührt. Nach 320 Min. werden 400 g 80 °C warmes Wasser zugegeben und mit einem Ultraturax (Fa. IKA) 3 bis 5 Min. homogenisiert.

Die Dispersion kann durch übliche naßchemische Applikationsverfahren wie Sprühen, Tauchen, Walzen usw. auf ein beliebiges Substrat aufgebracht werden und eignet sich insbesondere als abriebfeste Beschichtung für Polymere oder im undispergierten Zustand als Druckfarbe oder Lackadditiv.

### Beispiel 6

### a) Herstellung der lösungsmittelarmen Kondensatphase

Zu 24,8 g MEMO ® (Fa. Degussa-Hüls) werden 1,35 g 10 %-ige Ameisensäure gegeben und 3 Std. gerührt. Anschließend werden 0,32 g Aluminium sec-butoxid (Fa. Fluka) und 0,73 g Dynasilan® F 8861 zugegeben und 2 Std. bei Raumtemperatur gerührt. Danach werden dem Reaktionsgemisch in einem Scheidetrichter 25 g Wasser zugegeben und gut geschüttelt, wobei sich zwei Phasen bilden. Die organische Phase wird nach Phasentrennung direkt abgetrennt. Zur photochemischen Aushärtung des Gemisches werden 0,8 g des Photoinitiators Irgacure® 500 (Fa. Ciba) zugesetzt. Das Gemisch wird anschließend durch Rakeln auf Substrate wie z.B. Polycarbonatplatten aber auch auf Steinplatten aufgebracht und wie bereits beschrieben mit einem Quecksilberhochdruckstrahler unter einem UV-Trockner im Durchlauf mit einer Strahlungsleistung von 2 J/cm² getrocknet. Man erhält eine kratzfeste Oberfläche mit niedriger Oberflächenenergic (ca. 20 mJ/m²), die eine gute Resistenz gegenüber Stahlwolle zeigt.

### b) Herstellung einer Beschichtungslösung (mattierte, abriebfeste Beschichtung)

Zu 11 g der niedrig viskosen Kondensatphase werden 11 g Calciumcarbonatpulver (Calzimatt® 20 µm, Fa. Solvay) gegeben und gut vermischt. Nach Zugabe von 0,37 g Darocur® 1173 kann dieses Material ohne weitere Verdünnung z.B. auf Marmor aufgetragen werden. Nach der UV-Härtung mit einem Quecksilberhochdruckstrahler unter einem UV-Trockner im Durchlauf mit einer Strahlungsleistung von 2 J/cm² erhält man eine seidenmatter Oberfläche, die sich durch hohe Abriebbeständigkeit, hohe Resistenz gegen Kaffec, Rotwein sowie andere Verschmutzungen auszeichnet und eine hohe Rutschfestigkeit aufweist.

### Beispiel 7

### a) Herstellung der lösungsmittelarmen Kondensatphase

Zu 17,3 g Methyltriethoxysilan (MTEOS) (Fa. Degussa-Hüls), werden 1,35 g Zirkonbutylat gegeben und verrührt. Danach werden 10 g 10 %-ige Ameisensäure zugegeben und 48 Std. bei Raumtemperatur gerührt. Anschließend werden dem Reaktionsgemisch in einem Scheidetrichter 25 g Wasser zugegeben und gut geschüttelt, wobei sich zwei Phasen bilden. Die Kondensatphasen (untere Phase) wird im Anschluß daran abgetrennt

### b) Herstellung einer Emulsion (Feststoffgehalt etwa 15 %)

100 g der leicht viskosen Phase (Kondensationsrückstand) wird mit 20,0 g des Tensids Disponil® 1080 (Fa. Cognis) versetzt, im Wasserbad auf 80 °C erhitzt und gerührt. Nach 20 Min. werden 400 g 80 °C warmes Wasser zugegeben und mit einem Ultraturax (Fa. IKA) 3 bis 5 min. homogenisiert.

Diese Dispersion kann durch übliche naßchemische Applikationsverfahren wie Sprühen, Tauchen, Walzen usw. auf eine beliebiges Substrat aufgebracht werden und eignet sich insbesondere als Bindematerial für Glaswolle, Steinwolle, Papier, Steingranulate, Holz, Naturstoffe (z.B. Stroh), Textilien, usw.

## Patentansprüche

1. Verfahren zur Herstellung lösungsmittelarmcr Sol-Gel-Systeme mit den Verfahrensschritten:
a) Hydrolyse und Kondensation eines Silans und/oder eines Alkoxyds und/oder mehreren Alkoxydcn von Al, Ce, Ga, Ge, Sn, Ti, Zr, Hf, V, Nb und Ta,
b) Zugabe eines Überschusses von Wasser zu der Reaktionsmischung, bis eine Phasentrennung in eine Kondensatphase und eine wäßrige Phase einsetzt,
c) Abtrennen der Kondensatphase, die das lösungsmittelarme Sol-Gel-System enthält, und
d.) Beschichten eines Substrates mit dem lösungsmittelarmen Sol-Gel-System.

2. Verfahren gemäß Anspruch 1, **dadurch gekennzeichnet, daß** in Schritt a) Glycidyloxypropyltriethoxysilan (GPTES), 3-Methacryloxypropyltrimethoxysilan (MPTS), Methyltriethoxysilan (MTEOS) oder Tctraethoxysilan (TEOS) Vinyltriethoxysilan (VTES) oder Vinyltrimethoxysilan (VTMS) als Silan eingesetzt wird.

3. Verfahren gemäß Anspruch 1 oder 2, **dadurch gekennzeichnet, daß** die Kondensatphase aus Schritt c) wieder mit Wasser aufgenommen wird.

4. Verfahren gemäß Anspruch 1 oder 2, **dadurch gekennzeichnet, daß** der Kondensatphase aus Schritt c) ein Emulgator zugesetzt, mit der Kondensatphase vermischt und diese Mischphase anschließen mit Wasser aufgenommen wird.

5. Verfahren gemäß einem der vorhergehenden Ansprüche, **dadurch gekennzeichnet, daß** die wasserlöslichen der in Schritt a) eingesetzten Verbindungen durch Umsetzung mit wasserunlöslichen Verbindungen nach der Hydrolyse oder Kondensation in eine wasserunlösliche Form überfährt werden.

6. Verfahren gemäß einem der vorhergehenden Ansprüche, **dadurch gekennzeichnet, daß**, bezogen auf die Kondensatphase, die Kondensatphase, mit 0,5 bis 100 Gew.-% Nanopartikeln versetzt wird.

7. Verfahren gemäß Anspruch 6, **dadurch gekennzeichnet, daß** die Nanopartikel ein Größe von 2 bis 300 nm besitzen.

8. Verfahren gemäß Anspruch 1, **dadurch gekennzeichnet, daß** das Sol-Gel-System durch ein naßchemisches Verfahren auf ein Substrat appliziert wird, insbesondere durch Sprühen, Gießen, Fluten, Tauchen, Schleudern, Walzen oder Drucken.

9. Verfahren gemäß Anspruch 8, **dadurch gekennzeichnet, daß** eine Trocknung in einem Temperaturbereich von etwa 20 bis 500 °C für einen Zeitraum von 1 Sckunde bis zu mehreren Stunden erfolgt.

10. Verfahren gemäß Anspruch 9, **dadurch gekennzeichnet, daß** das Trocknen im Umluftofen erfolgt oder mittels geeigneter elektromagnetischer Strahlung, wie UV-, IR-, Elektronen- oder Mikrowellenstrahlung.

11. Verfahren gemäß einem der Ansprüche 1 bis 10 **dadurch gekennzeichnet, daß** das Substrat aus Glas, Keramik, Holz, Metall, Stein, Kunststoff und/oder Beton besteht.

12. Verfahren gemäß einem der Ansprüche 1 bis 10, **dadurch gekennzeichnet, daß** eine mindestens einmalige Wiederholung der Schritte Applikation des Sol-Gel-Systems und Trocknen erfolgt.

13. Verfahren gemäß Anspruch 12, **dadurch gekennzeichnet, daß** bei der wiederholten Applikation in der Zusammensetzung unterschiedliche Sol-Gel-Systeme eingesetzt werden.

## Claims

1. A method of making low-solvent sol-gel systems comprising the steps of:
a) hydrolysing and condensing a silane and/or an alkoxide and/or several alkoxides from amongst Al, Ce, Ga, Ge, Sn, Ti, Zr, Hf, V, Nb and Ta,
b) adding to the reaction mixture more than sufficient water to cause a phase separation into a condensate phase and an aqueous phase,
c) separating off the condensate phase containing the low-solvent sol-gel system and
d) coating a substrate with the low-solvent sol-gel system.

2. The method of claim 1, **characterised in that** the silane used in step a) is glycidyloxypropyl-triethoxysilane (GPTES), 3-methacryloxypropyltrimethoxysilane (MPTS), methyltriethoxysilane (MTEOS) or triethoxysilane (TEOS), vinyltriethoxysilane (VTES) or vinyltrimethoxysilane VTMS).

3. The method of claim 1 or 2, **characterised in that** the condensate phase from step c) is reabsorbed in water.

4. The method of claim 1 or 2, **characterised in that** an emulsifying agent is added to and mixed with the condensate phase from step c) to produce a mixed phase, which is subsequently absorbed in water.

5. Method according to one of the preceding claims, **characterised in that** after hydrolysis or condensation, the water-soluble compounds among the compounds used in step a) are converted into a water-insoluble form through reaction with water-insoluble compounds.

6. Method according to one of the preceding claims, **characterised in that** the condensate phase is mixed with 0.5 to 100 wt. % of nanoparticles, relative to the condensate phase.

7. The method of claim 6, **characterised in that** the nanoparticles are 2 to 300 nm in size.

8. The method of claim 1, **characterised in that** the sol-gel system is applied to a substrate by a wet-chemical process, in particular by spraying, casting, flooding, dipping, hurling, rolling or impressing.

9. The method of claim 8, **characterised by** a drying step lasting for 1 second to several hours at a temperature in the range from about 20 to 500 °C.

10. The method of claim 9, **characterised in that** the drying step is carried out in a forced-air oven or by means of suitable electromagnetic radiation, such as UV, IR, electron or microwave radiation.

11. Method according to one of the claims 1 to 10, **characterised in that** the substrate is made of glass, ceramic, wood, metal, stone, plastic and/or concrete.

12. Method according to one of the claims 1 to 10, **characterised in that** the sol-gel application and drying steps are repeated at least once.

13. The method of claim 12, **characterised in that** sol-gel systems of different compositions are used for the repeated applications.

## Revendications

1. Procédé de fabrication d'un système sol-gel pauvre en solvants, comprenant les étapes suivantes :
a) hydrolyse et condensation d'un silane et/ou d'un alcoxyde et/ou de plusieurs alcoxydes de Al, Ce, Ga, Ge, Sn, Ti, Zr, Hf, V, Nb et Ta,
b) ajout en excès d'eau au mélange réactionnel jusqu'à l'obtention d'une séparation de phase en une phase de condensation et une phase aqueuse,
c) séparation de la phase de condensation qui contient le système sol-gel pauvre en solvant, et
d) enduction d'un substrat avec le système sol-gel pauvre en solvant.

2. Procédé selon la revendication 1, **caractérisé en ce qu'**en tant que silane, on utilise dans l'étape a) du glycidoxypropyltriméthoxysilane (GPTES), du 3-méthacryloxypropyltriméthoxysilane (MPTS), du méthyltriéthoxysilane (MTEOS) ou du tétraéthoxysilane (TEOS), du vinyltriéthoxysilane (VTES) ou du vinyltriméthoxysilane (VTMS).

3. Procédé selon la revendication 1 ou 2, **caractérisé en ce que** la phase de condensation de l'étape c) est reprise avec de l'eau.

4. Procédé selon la revendication 1 ou 2, **caractérisé en ce qu'**un émulsifiant est ajouté à la phase de condensation de l'étape c), qu'il est mélangé à la phase de condensation et cette phase mixte est ensuite reprise avec de l'eau.

5. Procédé selon l'une des revendications précédentes, **caractérisé en ce qu'**après l'hydrolyse ou la condensation, les composants solubles dans l'eau utilisés dans l'étape a) sont convertis en une forme insoluble dans l'eau par transformation avec des composés insolubles dans l'eau.

6. Procédé selon l'une des revendications précédentes, **caractérisé en ce que** 0,5 à 100 % en poids de nanoparticules, rapporté à la phase de condensation, sont ajoutés à ladite phase de condensation.

7. Procédé selon la revendication 6, **caractérisé en ce que** les nanoparticules ont une taille comprise entre 2 et 300 nm.

8. Procédé selon la revendication 1, **caractérisé en ce que** le système sol-gel est appliqué sur un substrat par un procédé chimique humide, notamment par pulvérisation, versement, coulage, trempage, centrifugation, laminage ou impression.

9. Procédé selon la revendication 8, **caractérisé en ce qu'**un séchage est réalisé dans une fourchette de température comprise entre environ 20 et 500 °C pendant un intervalle de temps compris entre 1 seconde et plusieurs heures.

10. Procédé selon la revendication 9, **caractérisé en ce que** le séchage est réalisé dans une étuve à circulation d'air ou au moyen de rayonnements électromagnétiques appropriés, tels que des rayonnements UV, IR, d'électrons ou de micro-ondes.

11. Procédé selon l'une des revendications 1 à 10, **caractérisé en ce que** le substrat est en verre, en céramique, en bois, en métal, en pierre, en matière plastique et/ou en béton.

12. Procédé selon l'une des revendications 1 à 10, **caractérisé en ce que** l'étape d'application du système sol-gel et du séchage est répétée au moins une fois.

13. Procédé selon la revendication 12, **caractérisé en ce que** lors de la répétition de l'application, on utilise des systèmes sol-gel de compositions différentes.
